# EUROPEAN PATENT APPLICATION

(11) **EP 4 561 286 A1**
(43) Date of publication of application: **28.05.2025**
(21) Application number: 23842821.3
(22) Date of filing: 05.07.2023
(51) Int. Cl.: H05K 9/00, B22F 1/00, B22F 1/06, B22F 1/10, B22F 10/18, B29C 64/118, B33Y 10/00, B33Y 80/00, C08J 5/00, C08K 3/01, C08L 101/00, H01F 1/10, H01F 1/113, H01P 11/00, H01Q 17/00

(54) **METHOD FOR MANUFACTURING RADIO WAVE ABSORBER, RADIO WAVE ABSORBER, AND RADIO-WAVE-ABSORBING ARTICLE**

(30) Priority: 20.07.2022 JP 2022115275
(71) Applicant: FUJIFILM Corporation, Tokyo 106-8620 (JP)
(72) Inventor: HASHIMOTO Hirokazu, Minamiashigara-shi, Kanagawa 250-0193 (JP)
(74) Representative: Klunker IP Patentanwälte PartG mbB
(86) International application number: PCT/JP2023/024858
(87) International publication number: WO 2024/018896

(57) **Abstract**

Provided are a method for manufacturing a radio wave absorber, the method including three-dimensionally modeling a composition containing one or more kinds of particles selected from the group consisting of magnetic particles and dielectric particles, and a binder, with a three-dimensional printer, in which an aspect ratio of the particles is 3.0 or less, a radio wave absorber including magnetic particles, and a binder, in which among squareness ratios measured for each of predetermined seven directions of the radio wave absorber, a maximum value is defined as SQₘₐₓ, a minimum value is defined as SQₘᵢₙ, and a ratio (SQₘₐₓ/SQₘᵢₙ) of SQₘₐₓ to SQₘᵢₙ is less than 1.35, and a radio wave absorbing article including the radio wave absorber.

## Description

### BACKGROUND OF THE INVENTION

### [Technical Field]

The present invention relates to a method for manufacturing a radio wave absorber, a radio wave absorber, and a radio wave absorbing article.

### [Background Art]

PTL 1 discloses a method for manufacturing a radio wave absorber (in PTL 1, an "electromagnetic wave absorber").

### [Citation List]

### [Patent Literature]

[PTL 1] JP2015-133416A

### [Summary of Invention]

### [Technical Problem]

Specifically, PTL 1 discloses that a radio wave absorber is subjected to lamination modeling using a printer with three dimensions (3D). According to the three-dimensional modeling using a 3D printer, a molded product having various shapes can be directly modeled from shape data. Therefore, in recent years, for example, three-dimensional modeling using a 3D printer has attracted attention as a method for molding a small lot product, a prototype product produced by order, or the like.

Under such circumstances, an object of one aspect of the present invention is to provide a new method for manufacturing a radio wave absorber by three-dimensional modeling using a 3D printer.

### [Solution to Problem]

In recent years, as an electronic device that uses radio waves, a radar for recognizing an object by transmitting and receiving radio waves has attracted attention. For example, an on-vehicle radar transmits radio waves and receives radio waves which are the transmitted radio waves reflected by an object (such as a pedestrian, a vehicle, or the like), whereby it can recognize the presence of the object, the distance from the object, or the like. In order to prevent collision with an object, as necessary, an automatic driving control system of an automobile can automatically brake and stop the automobile or can automatically control the speed to keep the distance from the object based on the results obtained by the radar recognizing the object.

In order to improve the reliability of the system that carries out various controls based on the results obtained by the radar recognizing the object as described above, it is desired to improve the performance of the radar. For this reason, in recent years, it has begun to be examined to install a radio wave absorber on the front side (an incident side of the radio wave incident from the outside) of the radio wave transmitting and receiving unit of the radar to improve the recognition accuracy.

It is desirable that the radio wave absorber has excellent transmission attenuation characteristics. A radio wave absorber having excellent transmission attenuation characteristics is desirable, for example, from the viewpoint of improving the recognition accuracy of a radar. In addition, also in various other use applications in which a radio wave absorber is used, a radio wave absorber having excellent transmission attenuation characteristics is desirable. Therefore, the present inventors have repeatedly studied the transmission attenuation characteristics of the radio wave absorber three-dimensionally modeled using a 3D printer. As a result, it was newly found that, in a radio wave absorber three-dimensionally modeled using a 3D printer, the transmission attenuation characteristics easily change depending on an incidence angle of a radio wave (hereinafter, referred to as "polarization dependence"). However, in a case of being used for various applications, radio waves can be incident into the radio wave absorber from various angles. Therefore, it is desirable to reduce the polarization dependence. Therefore, as a result of further intensive studies, the present inventors have newly found that in a case of molding a radio wave absorber by three-dimensional modeling using a 3D printer, a radio wave absorber having a small polarization dependence can be manufactured by using particles having an aspect ratio of 3.0 or less.

That is, one aspect of the present invention is as follows.
[1] A method for manufacturing a radio wave absorber, the method comprising:
   three-dimensionally modeling a composition containing one or more kinds of particles selected from the group consisting of magnetic particles and dielectric particles, and a binder, with a three-dimensional printer (hereinafter, also referred to as a "3D printer"),
   in which an aspect ratio of the particles is 3.0 or less.
[2] The method for manufacturing a radio wave absorber according to [1],
   in which the particles are magnetic particles, and
   the magnetic particles are particles of a hexagonal ferrite.
[3] The method for manufacturing a radio wave absorber according to [2],
   in which the hexagonal ferrite is a substitution-type hexagonal ferrite.
[4] The method for manufacturing a radio wave absorber according to [3],
   in which the substitution-type hexagonal ferrite is a magnetoplumbite-type hexagonal ferrite having a composition represented by Formula 1,

      Formula 1 AFe₍₁₂₋ₓ₎AlₓO₁₉
   in Formula 1, A represents one or more kinds of atoms selected from the group consisting of Sr, Ba, Ca, and Pb, and x satisfies 0.50 ≤ x ≤ 8.00.
[5] The method for manufacturing a radio wave absorber according to [4],
   in which in Formula 1, the atom represented by A includes Sr.
[6] The method for manufacturing a radio wave absorber according to [1],
   in which the particles are dielectric particles, and
   the dielectric particles are carbon-based particles.
[7] A radio wave absorber comprising:
   magnetic particles; and
   a binder,
   in which in a case where any axial direction in a plane perpendicular to a thickness direction of the radio wave absorber is defined as a 0° direction,
   each of a direction rotated by 30°, a direction rotated by 60°, a direction rotated by 90°, a direction rotated by 120°, and a direction rotated by 150° in a clockwise direction with respect to the axial direction as a reference is defined as a 30° direction, a 60° direction, a 90° direction, a 120° direction, and a 150° direction, and
   among squareness ratios measured for each of the thickness direction of the radio wave absorber, the 0° direction, the 30° direction, the 60° direction, the 90° direction, the 120° direction, and the 150° direction, a maximum value is defined as SQₘₐₓ and a minimum value is defined as SQₘᵢₙ,
   a ratio (SQₘₐₓ/SQₘᵢₙ) of SQₘₐₓ to SQₘᵢₙ is less than 1.35.
[8] The radio wave absorber according to [7],
   in which an aspect ratio of the magnetic particles is 3.0 or less.
[9] The radio wave absorber according to [7] or [8],
   in which the magnetic particles are particles of a hexagonal ferrite.
[10] The radio wave absorber according to [9],
   in which the hexagonal ferrite is a substitution-type hexagonal ferrite.
[11] The radio wave absorber according to [10],
   in which the substitution-type hexagonal ferrite is a magnetoplumbite-type hexagonal ferrite having a composition represented by Formula 1,

      Formula 1 AFe₍₁₂₋ₓ₎AlₓO₁₉
   in Formula 1, A represents one or more kinds of atoms selected from the group consisting of Sr, Ba, Ca, and Pb, and x satisfies 0.50 ≤ x ≤ 8.00.
[12] The radio wave absorber according to [11],
   in which in Formula 1, the atom represented by A includes Sr.
[13] A radio wave absorbing article comprising:
   the radio wave absorber according to any one of [7] to [12].

According to one aspect of the present invention, it is possible to provide a new method for manufacturing a radio wave absorber by three-dimensional modeling using a 3D printer.

### [Brief description of Drawings]

[Fig. 1] Fig. 1 is a view showing three-dimensional modeling using a 3D printer of a fused deposition modeling method.
[Fig. 2] Fig. 2 is a diagram showing an example of a measurement direction of a squareness ratio.

### [Description of Embodiments]

### [Method for manufacturing radio wave absorber]

One aspect of the present invention relates to a method for manufacturing a radio wave absorber (hereinafter, also simply referred to as a "manufacturing method"), the method including molding a composition containing one or more kinds of particles selected from the group consisting of magnetic particles and dielectric particles, and a binder by three-dimensional modeling. In the manufacturing method, the aspect ratio of the particles is 3.0 or less.

In the present invention and the present specification, the term "radio wave" means an electromagnetic wave having a frequency of 3 terahertz (THz) or less. The "radio wave absorber" has radio wave absorbability with respect to radio waves of one or more frequencies.

### <Particle>

### (Aspect ratio)

**In** the present invention and the present specification, the aspect ratio of the particles selected from the group consisting of magnetic particles and dielectric particles is a value obtained by the following method.

A powder of particles is taken out from a composition containing particles selected from the group consisting of magnetic particles and dielectric particles, or from a radio wave absorber molded by three-dimensionally modeling such a composition with a 3D printer, according to a known method. A part of the extracted powder of the particles is collected and used as a powder for measurement. Alternatively, a part of the powder is collected as a powder for measurement from the powder of the particles used for preparing the composition. Here, the term "powder" means a collection of particles. For example, the powder of the particles can be taken out from the radio wave absorber by dissolving the binder included in the radio wave absorber by a known method or by heating the radio wave absorber at a high temperature (for example, about 500°C) to volatilize the binder.

The collected powder for measurement is observed with a scanning electron microscope (SEM) to acquire an SEM image. As the scanning electron microscope, a field emission-scanning electron microscope (FE-SEM) is used. SU8220 manufactured by Hitachi High-Technologies Corporation was used in Examples described later. As observation conditions, an acceleration voltage is set to 5.0 kV, a secondary electron image is acquired as an SEM image, and an observation magnification is set to 20,000 times.

**In** the obtained SEM image, a total of 20 particles in which the entire contour of the particles appears in the SEM image are randomly selected from the powder for measurement, and a position of a major axis is specified for each selected particle. A straight line having a longest distance among straight lines connecting two points on the contour of the particle in the SEM image is defined as a "major axis".

Thereafter, a cross section is processed with a focused ion beam (FIB) under conditions of an acceleration voltage of 30 kV, a working distance (WD) of 8.0 mm, and a probe current of 1660 pA, and the cross section at the position of the major axis specified above is exposed for each of the 20 particles selected above.

The exposed cross section of each particle is observed with an SEM to acquire a cross-sectional image. Regarding the SEM observation, the scanning electron microscope and the observation conditions to be used are as described above.

In the obtained cross-sectional image, a major axis length and a minor axis length are obtained as follows.

A distance between two points where the major axis intersects the contour of the particle is defined as "major axis length". In a straight line orthogonal to the major axis, a straight line having a longest distance between two points where the straight line intersects the contour of the particle is referred to as a "minor axis", and a distance between the two points where the minor axis intersects the contour of the particle is referred to as a "minor axis length".

For each particle, an aspect ratio is calculated as "aspect ratio = major axis length/minor axis length" from the major axis length and the minor axis length obtained by the above measurement.

An arithmetic average of the aspect ratios obtained for the 20 particles is defined as the aspect ratio of the particles contained in the composition or the radio wave absorber.

From the viewpoint of reducing the polarization dependence of the radio wave absorber molded by three-dimensional modeling with a 3D printer, the aspect ratio of the particles contained in the composition used for three-dimensional modeling in the manufacturing method is 3.0 or less, preferably 2.8 or less, and more preferably 2.6 or less, 2.4 or less, 2.2 or less, 2.0 or less, and 1.8 or less in this order. In addition, the aspect ratio can be, for example, 1.0 or more or 1.1 or more.

The particles are one or more kinds of particles selected from the group consisting of magnetic particles and dielectric particles. The composition can also contain particles of different types in any proportion as the particles selected from the group consisting of magnetic particles and dielectric particles. The same applies to a radio wave absorber described later. In the present invention and the present specification, "magnetic" means ferromagnetic property, and "dielectric" means a substance having a volume resistivity (ρᵥ) at 20°C, which is an intrinsic value of the substance, of 1 × 10⁵ Ω·m or more.

### (Dielectric particles)

As the dielectric particles contained in the composition, particles of various dielectrics can be used as long as the aspect ratio obtained by the method described above is 3.0 or less. For example, carbon-based particles can be used as the dielectric particles. Here, the term "based" is used to mean "include". Examples of the carbon-based particles include particles of various carbon-based materials such as carbon black and graphite.

### (Magnetic particle)

Examples of the magnetic particles contained in the composition include particles of various magnetic materials such as ferrite, iron oxide, cobalt, and chromium oxide. From the viewpoint of radio wave absorbability, as the magnetic particles, particles of a hexagonal ferrite are preferable. A type of the magnetic material constituting the magnetic particles can be confirmed by performing analysis by an X-ray diffraction method. For example, a powder of magnetic particles can be taken out from a composition containing magnetic particles or a radio wave absorber containing magnetic particles by a known method, and the taken-out powder can be analyzed by an X-ray diffraction method. Alternatively, a part of the powder can be collected from the powder of the magnetic particles used for preparing the composition, and the collected powder can be analyzed by an X-ray diffraction method. Alternatively, it can be checked by, for example, the following method. A part or all of the radio wave absorber is finely chopped, immersed in a solvent (for example, hexafluoroisopropanol) for 1 or 2 days, and then dried. The dried radio wave absorber is further ground finely and subjected to analysis according to the X-ray diffraction method.

### Particles of hexagonal ferrite

In the present invention and the present specification, the term "particles of a hexagonal ferrite" refers to magnetic particles in which a crystal structure of a hexagonal ferrite is detected as the main phase by analysis according to the X-ray diffraction method. The main phase refers to a structure to which the highest intensity diffraction peak attributes in the X-ray diffraction spectrum are obtained according to the X-ray diffraction method. For example, in a case where the highest intensity diffraction peak is attributed to a hexagonal ferrite crystal structure in an X-ray diffraction spectrum obtained by the X-ray diffraction method, it is determined that the hexagonal ferrite crystal structure is detected as the main phase. In a case where only a single structure is detected according to the X-ray diffraction method, this detected structure is used as the main phase. The hexagonal ferrite crystal structure includes at least an iron atom, a divalent metal atom, and an oxygen atom, as a constituent atom. In the unsubstitution-type hexagonal ferrite, the atoms that constitute the crystal structure of the hexagonal ferrite are only the iron atom, the divalent metal atom, and the oxygen atom. On the other hand, the substitution-type hexagonal ferrite contains one or more kinds of other atoms together with the iron atom, the divalent metal atom, and the oxygen atom, as atoms that constitute the crystal structure of the hexagonal ferrite. These one or more kinds of other atoms are generally atoms that are substituted for a part of iron in the crystal structure of hexagonal ferrite. The divalent metal atom is a metal atom that is capable of being a divalent cation, as an ion, and examples thereof include an alkaline earth metal atom such as a strontium atom, a barium atom, a calcium atom, and a lead atom. In the present invention and the present specification, the hexagonal strontium ferrite particle means one in which the main divalent metal atom contained in this particle is a strontium atom, and the hexagonal barium ferrite particle means one in which the main divalent metal atom contained in this particle is a barium atom. The same applies to particles of other types of hexagonal ferrite. The main divalent metal atom means a divalent metal atom that occupies the largest amount among the divalent metal atoms contained in this particle in terms of % by atom. However, rare earth atoms shall not be included in the above divalent metal atoms. The term "rare earth atom" in the present invention and the present specification is selected from the group consisting of a scandium atom (Sc), a yttrium atom (Y), and a lanthanoid atom. The lanthanoid atom is selected from the group consisting of a lanthanum atom (La), a cerium atom (Ce), a praseodymium atom (Pr), a neodymium atom(Nd), a promethium atom (Pm), a samarium atom (Sm), a europium atom (Eu), a gadolinium atom (Gd), a terbium atom (Tb), a dysprosium atom (Dy), a holmium atom (Ho), an erbium atom (Er), a thulium atom (Tm), a ytterbium atom (Yb), and a lutetium atom (Lu).

Regarding the particle of the hexagonal ferrite, the hexagonal ferrite that constitutes the particle includes one or more kinds of hexagonal ferrites selected from the group consisting of hexagonal strontium ferrite, hexagonal barium ferrite, hexagonal calcium ferrite, and hexagonal lead ferrite. From the viewpoint of the radio wave absorbability in the high frequency band, it is preferably one or more kinds of hexagonal ferrites selected from the group consisting of hexagonal strontium ferrite, hexagonal barium ferrite, and hexagonal calcium ferrite, more preferably hexagonal strontium ferrite and/or hexagonal barium ferrite, and still more preferably hexagonal strontium ferrite.

In one form, the particles of the hexagonal ferrite can be particles of a magnetoplumbite-type (generally referred to as "M-type") hexagonal ferrite. The magnetoplumbite-type hexagonal ferrite has a composition represented by a composition formula: AFe₁₂O₁₉ in a case of being an unsubstitution-type which does not contain an atom that substitutes iron. Here, A can represent one or more kinds of atoms selected from the group consisting of Sr, Ba, Ca, and Pb, and also includes a form in which two or more of these atoms are contained in any ratio.

The hexagonal ferrite that is preferable from the viewpoint of radio wave absorbability includes, for example, a substitution-type hexagonal ferrite. Specific examples of the substitution-type hexagonal ferrite include a substitution-type magnetoplumbite-type hexagonal ferrite in which a part of iron atoms of the magnetoplumbite-type hexagonal ferrite are substituted with an aluminum atom. As one form of such hexagonal ferrite, hexagonal ferrite having a composition represented by Formula 1 can be mentioned.

Formula 1 AFe₍₁₂₋ₓ₎AlₓO₁₉

In Formula 1, A represents one or more kinds of atoms (hereinafter, also referred to as an "A atom") selected from the group consisting of Sr, Ba, Ca, and Pb, it may be only one kind of atom, it may contain two or more kinds of atoms in any ratio, and, from the viewpoint of improving the uniformity of the composition between particles contained in the radio wave absorber, it is preferably only one kind of atom.

From the viewpoint of the radio wave absorbability in the high frequency band, A in Formula 1 is preferably one or more kinds of atoms selected from the group consisting of Sr, Ba, and Ca, and more preferably one or more kinds of atoms selected from the group consisting of Sr and Ba. It is still more preferable that Sr is contained, and it is even still more preferable that A is Sr.

In Formula 1, x satisfies 0.50 ≤ x ≤ 8.00.

In one form, x can satisfy 1.50 ≤ x ≤ 8.00. From the viewpoint of the radio wave absorbability in the high frequency band, x is preferably 1.50 or more, more preferably more than 1.50, still more preferably 2.00 or more, and even still more preferably more than 2.00. In addition, from the viewpoint of magnetic properties, x is 8.00 or less, preferably less than 8.00, more preferably 6.00 or less, and still more preferably less than 6.00.

Specific examples of the form which is the substitution-type hexagonal ferrite represented by Formula 1 belonging to a magnetoplumbite type and in which x satisfies 1.50 ≤ x ≤ 8.00 include SrFe_{(9.58)}Al_{(2.42)}O₁₉, SrFe_{(9.37)}Al_{(2.63)}O₁₉, SrFe_{(9.27)}Al_{(2.73)}O₁₉, SrFe_{(9.85)}Al_{(2.15)}O₁₉, SrFe_{(10.00)}Al_{(2.00)}O₁₉, SrFe_{(9.74)}Al_{(2.26)}O₁₉, SrFe_{(10.44)}Al_{(1.56)}O₁₉, SrFe_{(9.79)}Al_{(2.21)}O₁₉, SrFe_{(9.33)}Al_{(2.67)}O₁₉, SrFe_{(7.88)}Al_{(4.12)}O₁₉, SrFe_{(7.04)}Al_{(4.96)}O₁₉, SrFe_{(7.37)}Al_{(4.63)}O₁₉, SrFe_{(6.25)}Al_{(5.75)}O₁₉, SrFe_{(7.71)}Al_{(4.29)}O₁₉, Sr_{(0.80)}Ba_{(0.10)}Ca_{(0.10)}Fe_{(9.83)}Al_{(2.17)}O₁₉, BaFe_{(9.50)}Al_{(2.50)}O₁₉, CaFe_{(10.00)}Al_{(2.00)}O₁₉, and PbFe_{(9.00)}Al_{(3.00)}O₁₉. In addition, specific examples thereof also include the substitution-type hexagonal strontium ferrite described in the section of Examples described later. The composition of the magnetic particle can be confirmed, for example, by subjecting a dissolution solution in which the magnetic particle is dissolved, to a high frequency inductively coupled plasma emission spectroscopic analysis. Specific examples of the checking method include a method described in the section of Examples described later. Alternatively, after exposing a cross-section by cutting the radio wave absorber or the like, the exposed cross-section is subjected to, for example, energy dispersive X-ray analysis, whereby the composition of the magnetic particle contained in the radio wave absorber can be checked.

In addition, in one form, x can satisfy 0.50 ≤ x < 1.50. For example, from the viewpoint of the radio wave absorbability in a high frequency band in a range of 35.0 GHz to 66.0 GHz, preferably 45.0 GHz to 66.0 GHz, and more preferably 55.0 GHz to 66.0 GHz, x can be set to 0.50 or more, and x is preferably more than 0.80. In addition, from the viewpoint of magnetic properties, x is preferably less than 1.50 and more preferably 1.20 or less.

In one form, in the substitution-type hexagonal ferrite, the crystal phase can be a single phase, and a plurality of crystal phases can be included. It is preferable that the crystal phase is a single phase, and it is more preferable that the powder of the hexagonal ferrite is a substitution-type hexagonal ferrite of which the substitution type is a magnetoplumbite type in which the crystal phase is a single phase.

The case where the "crystal phase is a single phase" refers to a case where only one kind of diffraction pattern showing any crystal structure is observed in analysis carried out according to the X-ray diffraction method. The analysis according to the X-ray diffraction method can be carried out, for example, according to the method described in the section of Examples described later. In a case where a plurality of crystal phases are included, two or more kinds of diffraction patterns showing any crystal structure are observed in the analysis according to the X-ray diffraction method. Regarding the attribution of the diffraction pattern, for example, a database of the International Centre for Diffraction Data (ICDD, registered trade name) can be referenced. For example, regarding the diffraction pattern of the magnetoplumbite-type hexagonal ferrite containing Sr, "00-033-1340" of the International Centre for Diffraction Data (ICDD) can be referred to. However, in a case where a part of iron atoms are substituted with a substituent atom such as an aluminum atom, the peak position shifts from the peak position in a case where the substituent atom is not included.

### Method for manufacturing particles of hexagonal ferrite

There are various methods as a method for manufacturing particles of the hexagonal ferrite, and in a case where the composition used in the manufacturing method contains particles of the hexagonal ferrite, the method for manufacturing particles of the hexagonal ferrite is not particularly limited. Hereinafter, a solid phase method will be described as an example of the method for manufacturing particles of a hexagonal ferrite. The solid phase method is a method for manufacturing particles of a hexagonal ferrite by sintering a mixture obtained by mixing a plurality of solid raw materials.

Examples of the solid raw material that is used in the solid phase method include a compound of an iron atom and a compound of an A atom, and further include a compound of a substituent atom in a case of manufacturing particles of a substitution-type hexagonal ferrite. These compounds can be an oxide, a carbonate, or the like. The A atom and the substituent atom are as described above. The mixing ratio between a plurality of solid raw materials may be determined according to the desired hexagonal ferrite composition. A raw material mixture can be obtained by mixing a plurality of solid raw materials at the same time or sequentially mixing them in any order. In addition, the mixing of solid raw materials is not limited to being carried out under dry conditions. Under wet conditions, for example, a solvent such as water can be added, and mixing can be carried out in a slurry state. The mixing of the solid raw materials can be carried out by a commercially available mixing device or a mixing device having a publicly known configuration. An example of the mixing device is a paint shaker. During mixing, dispersion media such as dispersion beads can also be used. The mixing can be carried out, for example, in an ambient air atmosphere at room temperature.

After the above mixing, the obtained raw material mixture can be sintered. In this sintering, the crystallization of the raw material mixture can be promoted, whereby the crystal structure of the hexagonal ferrite can be formed. Regarding the sintering conditions, the sintering temperature can be set, for example, in a range of 1,000°C to 1,500°C. The sintering temperature can be, for example, the atmosphere temperature inside the device in which sintering is carried out (for example, the temperature inside the heating furnace). The sintering time can be in a range of 1 hour to 6 hours. However, the ranges are described as examples, and the sintering may be carried out under conditions under which the crystal structure of the hexagonal ferrite is capable of being formed. The sintering can be carried out, for example, in an ambient air atmosphere.

In general, in the sintering of the raw material mixture performed for the manufacture of the particles of the hexagonal ferrite, a fusion agent (also referred to as a flux) may be added to the powder of the raw material mixture and then sintering may be performed. Examples of the fusion agent include SrCl₂, SrCl₂·6H₂O, CaCl₂·2H₂O, MgCl₂, KCl, NaCl, BaCl₂·2H₂O, and Na₂B₄O₇. According to the study by the present inventors, in a case where the fusion agent is used, the value of the aspect ratio of the particles of the obtained hexagonal ferrite tends to increase. Therefore, in an example of a means for controlling the aspect ratio of the particles of the hexagonal ferrite to 3.0 or less, a fusion agent is not used.

The raw material mixture before sintering can be subjected to a dry-type or wet-type pulverization step, and/or the sintered product after the sintering can be subjected to a dry-type or wet-type pulverization step. In a case of carrying out the pulverization step, it is possible to adjust a size of the particles of the hexagonal ferrite. The pulverization can be carried out with a publicly known pulverizing unit such as a mortar and pestle or a pulverizer (a cutter mill, a ball mill, a bead mill, a roller mill, a jet mill, a hammer mill, an attritor, or the like).

The sintered product obtained after the sintering can be subjected to a step such as pulverization, as necessary, and then subjected to an annealing treatment. The annealing treatment can be carried out, for example, in a heating furnace having a furnace temperature of 500°C to 1,100°C for about 1 to 10 hours.

One or more publicly known steps such as washing and drying can be optionally carried out before and/or after the various steps described above.

### (Volume filling rate)

The composition used for three-dimensional modeling in the manufacturing method and the radio wave absorber obtained by molding the composition by three-dimensional modeling contain the particles and binder. In the composition and the radio wave absorber, the filling rate of the particles is not particularly limited. In one form, the filling rate can be 35% by volume or less and can be, for example, in a range of 15% to 35% by volume in terms of the volume filling rate. In addition, in another form, the volume filling rate can be 35% by volume or more. In this case, the volume filling rate can be, for example, in a range of 35% to 60% by volume, and it can also be in a range of 35% to 50% by volume. The volume filling rate means a volume-based content ratio in which a total volume (however, in a case where a solvent is contained, the solvent is excluded, and the same applies hereinafter) of the composition or a total volume of the radio wave absorber is set to 100% by volume.

In the composition, the volume filling rate of the particles can be obtained from formulation of the composition. Regarding the radio wave absorber, for example, the volume filling rate of the particles can be determined by collecting the particles from the radio wave absorber by a known method and calculating "(volume of collected particles/total volume of radio wave absorber) × 100". Here, the total volume of the radio wave absorber and the volume of the particles can be obtained by a known method. Alternatively, in a case where the composition of the composition used for preparing a radio wave absorber is known, the volume filling rate of the particles in the radio wave absorber can be determined from this known composition.

In addition, the volume filling rate of the particles in the radio wave absorber can also be determined by the following method using a cross-section SEM image acquired by a scanning electron microscope (SEM).

A measurement sample having a square plane, one side of which has a length of 5 mm, is cut out from a randomly determined position of the radio wave absorber to be measured. A sample for cross-section observation is prepared from the cut-out sample. The sample for cross-section observation is prepared by focused ion beam (FIB) processing. The prepared cross-section observation sample is observed by SEM, and a cross-sectional image (cross-sectional SEM image) is captured. As the SEM, a field emission-scanning electron microscope (FE-SEM) is used. Using the FE-SEM, a cross-section observation sample is set on a stage so that the FIB-processed cross-section faces upward, and a cross-section SEM image with a visual field of 30 µm × 40 µm is obtained under the conditions of an acceleration voltage of 15 kV and an observation magnification of 3000 folds. The obtained cross-section SEM image is subjected to binarization processing, and the proportion (in terms of the area) of the particles is calculated.

The above operation is carried out on five measurement samples cut out from different positions of the radio wave absorber to be measured, and the volume filling rate of the particles can be determined as the arithmetic average of the obtained five values. It is noted that, as necessary, the elemental analysis of the cross-section observation sample can be carried out and the portion of the particles in the cross-section SEM image can also be specified.

The volume filling rates of the other components described in the present specification can also be determined in the same manner as described above.

### <Composition used for three-dimensional modeling>

The composition used for three-dimensional modeling in the manufacturing method contains at least the particles and a binder. The details of the particles are as described above.

### <<Binder>>

The binder can be, for example, a resin, and examples of the resin include a thermoplastic resin and a thermosetting resin.

Examples of the thermoplastic resin include an acrylic resin, polyacetal, polyamide, polyethylene, polypropylene, polyethylene terephthalate, polybutylene terephthalate, a polyethylene terephthalate-1,4-cyclohexanedimethanol terephthalate copolymer, polylactic acid, polycarbonate, polystyrene, polyphenylene sulfide, polyvinyl chloride, an acrylonitrile butadiene styrene (ABS) resin obtained by copolymerization of acrylonitrile, butadiene, and styrene; and an acrylonitrile styrene (AS) resin obtained by copolymerization of acrylonitrile and styrene.

Examples of the thermosetting resin include a phenol resin, an epoxy resin, a melamine resin, a urea resin, an unsaturated polyester, a diallyl phthalate resin, a urethane resin, and a silicon resin.

The binder can also be rubber. From viewpoints that the mixability with the magnetic particles is good and the radio wave absorber having more excellent durability, weather fastness, and impact resistance can be manufactured, examples of the rubber include butadiene rubber, isoprene rubber, chloroprene rubber, halogenated butyl rubber, fluororubber, urethane rubber, acrylic rubber (abbreviation: ACM) obtained by copolymerization of an acrylic acid ester (for example, ethyl acrylate, butyl acrylate, or 2-ethylhexyl acrylate) and another monomer, ethylene-propylene rubber obtained by coordination polymerization of ethylene and propylene using a Ziegler catalyst, butyl rubber (abbreviation: IIR) obtained by copolymerization of isobutylene and isoprene, styrene butadiene rubber (abbreviation: SBR) obtained by copolymerization of butadiene and styrene, acrylonitrile butadiene rubber (abbreviation: NBR) obtained by copolymerization of acrylonitrile and butadiene, and silicone rubber.

In a case of manufacturing a radio wave absorber including rubber as a binder, the composition may include various additives such as a vulcanizing agent, a vulcanization aid, a softening agent, and a plasticizer, in addition to the rubber. Examples of the vulcanizing agent include sulfur, an organic sulfur compound, and a metal oxide.

Examples of the binder include a thermoplastic elastomer (TPE). Examples of the thermoplastic elastomer include an olefin-based thermoplastic elastomer (a thermoplastic olefinic elastomer (TPO)), a styrene-based thermoplastic elastomer (a thermoplastic styrenic elastomer (TPS)), an amide-based thermoplastic elastomer (a thermoplastic polyamide elastomer (TPA), and a polyester-based thermoplastic elastomer (a thermoplastic copolyester (TPC)).

The composition and the radio wave absorber obtained by molding the composition by three-dimensional modeling may contain only one kind of binder or may contain two or more kinds of binders. The volume filling rate of the binder in the composition and the radio wave absorber is not particularly limited, and it is, for example, preferably 65% by volume or more, more preferably 65% by volume or more and 92% by volume or less, and still more preferably 65% by volume or more and 85% by volume or less. In a case where the composition and the radio wave absorber contain two or more kinds of binders, the volume filling rate means the total volume filling rate of the two or more kinds of binders. This point also identically applies to the volume filling rates of other components.

### <<Additive>>

The composition and the radio wave absorber may randomly contain or may not contain one or more additives in any proportion. Examples of the additive include an antioxidant, a light stabilizer, a dispersing agent, a dispersing aid, a fungicide, an antistatic agent, a plasticizer, an impact improver, a crystal nucleating agent, a lubricant, a surfactant, a pigment, a dye, a filler, a mold release agent (fatty acid, a fatty acid metal salt, an oxyfatty acid, a fatty acid ester, an aliphatic partially saponified ester, paraffin, a low molecular weight polyolefin, a fatty acid amide, an alkylenebis fatty acid amide, an aliphatic ketone, a fatty acid lower alcohol ester, a fatty acid polyhydric alcohol ester, a fatty acid polyglycol ester, a modified silicone, and the like), a processing aid, an antifogging agent, a drip inhibitor, and an antibacterial agent. In the additive, one component may have two or more functions.

### (Antioxidant)

In one form, examples of the preferred additive include an antioxidant.

The antioxidant is not particularly limited, and a publicly known antioxidant can be used.

Examples of the antioxidant are described in, for example, "Comprehensive Technology for Polymer Stabilization - Mechanism and Application Development -" published by CMC Publishing Co., Ltd., supervised by Yasukazu Okatsu. This description is incorporated in the present specification by reference.

Examples of the kind of the antioxidant include a phenol-based antioxidant, an amine-based antioxidant, a phosphorus-based antioxidant, and a sulfur-based antioxidant.

As the antioxidant, it is preferable to use a phenol-based antioxidant and/or an amine-based antioxidant in combination with a phosphorus-based antioxidant and/or a sulfur-based antioxidant.

Examples of the phenol-based antioxidant include ADEKA STAB AO-20, ADEKA STAB AO-30, ADEKA STAB AO-40, ADEKA STAB AO-50, ADEKA STAB AO-60, ADEKA STAB AO-80, and ADEKA STAB AO-330, manufactured by ADEKA Corporation; and IRGANOX 1010, IRGANOX 1035, IRGANOX 1076, IRGANOX 1098, IRGANOX 1135, IRGANOX 1330, IRGANOX 1726, IRGANOX 245, IRGANOX 259, IRGANOX 3114, and IRGANOX 565, manufactured by BASF Japan Ltd. It is noted that the above "ADEKA STAB" and "IRGANOX" are both registered trade names.

Examples of the amine-based antioxidants include Sanol LS-770, Sanol LS-765, and Sanol LS-2626, manufactured by Mitsubishi-Chemical Foods Corporation; ADEKA STAB LA-77, ADEKA STAB LA-57, ADEKA STAB LA-52, ADEKA STAB LA-62, ADEKA STAB LA-63, ADEKA STAB LA-67, ADEKA STAB LA-68, and ADEKA STAB LA-72, manufactured by ADEKA Corporation; and TINUVIN 123, TINUVIN 144, TINUVIN 622, TINUVIN 765, and TINUVIN 944, manufactured by BASF Japan Ltd. It is noted that the above "ADEKA STAB" and "TINUVIN" are both registered trade names.

In addition, an amine-based compound capable of quenching radicals can also be used as the antioxidant. Examples of such an amine-based compound include polyethylene glycol bis TEMPO [Sigma-Aldrich Co., LLC] and sebacic acid bis TEMPO. It is noted that "TEMPO" is an abbreviation for tetramethylpiperidin-1-oxyl.

Examples of the phosphorus-based antioxidant include ADEKA STAB PEP-8, ADEKA STAB PEP-36, ADEKA STAB HP-10, and ADEKA STAB 2112, manufactured by ADEKA Corporation; and IRGAFOS 168 manufactured by BASF Japan Ltd. It is noted that the above "ADEKA STAB" and "IRGAFOS" are both registered trade names.

Examples of the sulfur-based antioxidant include ADEKA STAB AO-412S and ADEKA STAB AO-503S, manufactured by ADEKA Corporation. It is noted that the above "ADEKA STAB" is a registered trade name.

Among the above, the phenol-based antioxidant is preferably one or more selected from the group consisting of ADEKA STAB AO-20, ADEKA STAB AO-60, ADEKA STAB AO-80, and IRGANOX 1010, the amine-based antioxidant is preferably ADEKA STAB LA-52, the phosphorus-based antioxidant is preferably ADEKA STAB PEP-36, and the sulfur-based antioxidant is preferably ADEKA STAB AO-412S.

In a case of containing an antioxidant, the above radio wave absorber may contain only one kind of antioxidant or may contain two or more kinds of antioxidants.

In a case where the composition and the radio wave absorber contain an antioxidant, the content of the antioxidant in the composition or the radio wave absorber is not particularly limited, and it is, for example, preferably 0.1 parts by mass to 10 parts by mass and more preferably 0.5 parts by mass to 5 parts by mass with respect to 100 parts by mass of the binder from the viewpoint of both suppressing the decomposition of the binder and suppressing the bleeding of the antioxidant.

### (Light stabilizer)

In one form, examples of the preferred additive include a light stabilizer.

Examples of the light stabilizer include HALS (that is, a hindered amine light stabilizer), an ultraviolet absorbing agent, and a singlet oxygen quencher.

The HALS may be a high molecular weight HALS, a low molecular weight HALS, or a combination of a high molecular weight HALS and a low molecular weight HALS.

In a case of containing a light stabilizer, the above radio wave absorber may contain only one kind of light stabilizer or may contain two or more kinds of light stabilizers.

### HALS having high molecular weight

In the present invention and the present specification, the term "high molecular weight HALS" means a hindered amine light stabilizer having a weight-average molecular weight of more than 1,000.

Examples of the high molecular weight HALS include, as an oligomer-type HALS, poly [6-(1,1,3,3-tetramethylbutyl)imino-1,3,5-triazine-2,4-diyl] [(2,2,6,6-tetramethyl-4-piperidyl)imino]hexamethylene [(2,2,6,6-tetramethyl-4-piperidyl)imino] and dimethyl succinate-1-(2-hydroxyethyl)-4-hydroxy-2,2,6,6-tetramethylpiperidine polycondensate.

Examples of the commercially available high molecular weight HALS product include CHIMASSORB 944LD and TINUVIN 622LD, manufactured by BASF Japan Ltd. It is noted that the above "CHIMASSORB" and "TINUVIN" are both registered trade names.

The weight-average molecular weight (Mw) in the present invention and the present specification is a value measured according to gel permeation chromatography (GPC). In the measurement using the gel permeation chromatography (GPC), HLC (registered trade name) -8220GPC [manufactured by Tosoh Corporation] can be used as the measurement device, TSKgel (registered trade name) Super HZM-M [4.6 mm ID ×15 cm, manufactured by Tosoh Corporation], Super HZ4,000 [4.6 mm ID x 15 cm, manufactured by Tosoh Corporation], Super HZ3,000 [4.6 mm ID x 15 cm, manufactured by Tosoh Corporation], and Super HZ2,000 [4.6 mm ID x 15 cm, manufactured by Tosoh Corporation] are connected one by one, respectively, in series and can be used as the column, and tetrahydrofuran (THF) can be used as the eluent.

The measurement conditions can be a sample concentration of 0.2% by mass, a flow rate of 0.35 mL/min, a sample injection amount of 10 µL, and a measurement temperature of 40°C, and a differential refractive index (RI) detector can be used as the detector.

The calibration curve can be created using "Standard sample TSK standard, polystyrene", "F-40", "F-20", "F-4", "F-1", "A-5000", "A-2500", and "A-1000", manufactured by Tosoh Corporation.

In a case where the composition and the radio wave absorber contain a high molecular weight HALS, the content of the high molecular weight HALS in the composition and the radio wave absorber is not particularly limited, and it is, for example, preferably 0.2% by mass to 10% by mass with respect to the total mass of the composition and the radio wave absorber.

The content of the high molecular weight HALS in the above radio wave absorber is preferably made to be 0.2% by mass or more with respect to the total mass of the radio wave absorber from the viewpoint of improving weather fastness.

In a case where the content of the high molecular weight HALS in the radio wave absorber is 10% by mass or less with respect to the total mass of the radio wave absorber, the decrease in mechanical strength and the occurrence of blooming tend to be capable of being suppressed.

### HALS having low molecular weight

In the present invention and the present specification, the term "low molecular weight HALS" means a hindered amine light stabilizer having a molecular weight of 1,000 or less (preferably 900 or less and more preferably 600 to 900).

Examples of the low molecular weight HALS include tris(2,2,6,6-tetramethyl-4-piperidyl)benzene-1,3,5-tricarboxylate, tris(2,2,6,6-tetramethyl-4-piperidyl)-2-acetoxypropane-1,2,3-tricarboxylate, tris(2,2,6,6-tetramethyl-4-piperidyl)-2-hydroxypropane-1,2,3-tricarboxylate, tris(2,2,6,6-tetramethyl-4-piperidyl)triazine-2,4,6-tricarboxylate, tris(2,2,6,6-tetramethyl-4-piperidyl)butane-1,2,3-tricarboxylate, tetrakis(2,2,6,6-tetramethyl-4-piperidyl)propane-1,1,2,3-tetracarboxylate, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, and 2-(3,5-di-t-butyl-4-hydroxybenzyl)-2-n-butylmalonate bis(1,2,2,6,6-pentamethyl-4-piperidyl).

Examples of the commercially available low molecular weight HALS product include ADEKA STAB LA-57, and ADEKA STAB LA-52, manufactured by ADEKA Corporation; and TINUVIN 144 manufactured by BASF Japan Ltd. It is noted that the above "ADEKA STAB" and "TINUVIN" are both registered trade names.

In a case where the composition and the radio wave absorber contain a low molecular weight HALS, the content of the low molecular weight HALS in the composition and the radio wave absorber is not particularly limited; however, it is, for example, preferably 0.2% by mass to 10% by mass with respect to the total mass of the composition and the radio wave absorber.

The content of the low molecular weight HALS in the above radio wave absorber is preferably made to be 0.2% by mass or more with respect to the total mass of the radio wave absorber from the viewpoint of improving weather fastness.

In a case where the content of the low molecular weight HALS in the radio wave absorber is 10% by mass or less with respect to the total mass of the radio wave absorber, the decrease in mechanical strength and the occurrence of blooming tend to be capable of being suppressed.

### UV absorbing agent

Examples of the ultraviolet absorbing agent include benzotriazole-based ultraviolet absorbing agents such as 2-(2'-hydroxy-3',5'-di-t-butylphenyl)benzotriazole, 2-(3,5-di-t-amyl-2-hydroxyphenyl)benzotriazole, 2-(2'-hydroxy-5'-methyl-phenyl)benzotriazole, 2-(2'-hydroxy-5'-t-octylphenyl)benzotriazole, 2-(2'-hydroxy-3',5'-di-t-amylphenyl)benzotriazole, 2-[2'-hydroxy-3'-(3",4",5",6"-tetrahydro-phthalimidemethyl)-5'-methylphenyl]benzotriazole, 2,2'-methylenebis[4-(1,1,3,3-tetramethylbutyl)-6-(2H-benzotriazole-2-yl)phenol], 2-[2-hydroxy-3,5-bis(α,α-dimethylbenzyl)phenyl]-2H-benzotriazole, 2-(2-hydroxy-4-octyloxyphenyl)-2H-benzotriazole, and 2-(2H-benzotriazole-2-yl)-4-methyl-6-(3,4,5,6-tetrahydrophthalimidylmethyl)phenol; benzophenone-based ultraviolet absorbing agents such as 2-hydroxy-4-methoxybenzophenone, 2,4-dihydroxybenzophenone, 2,2'-dihydroxy-4-methoxybenzophenone, 2,2'-dihydroxy-4,4'-dimethoxybenzophenone, 2-hydroxy-4-n-octoxybenzophenone, 2,2',4,4'-tetrahydroxybenzophenone, 4-dodecyloxy-2-hydroxybenzophenone, a 3,5-di-t-butyl-4-hydroxybenzoylbenzoic acid n-hexadecyl ester, 1,4-bis(4-benzoyl-3-hydroxyphenoxy)butane, 1,6-bis(4-benzoyl-3-hydroxyphenoxy)hexane; and cyanoacrylate-based ultraviolet absorbing agents represented by ethyl-2-cyano-3,3-diphenylacrylate.

Examples of the commercially available ultraviolet absorbing agent include TINUVIN 320, TINUVIN 328, TINUVIN 234, TINUVIN 1577, TINUVIN 622, and IRGANOX series, manufactured by BASF Japan Ltd.; ADEKA STAB LA31 manufactured by ADEKA Corporation; and SEESORB 102, SEESORB 103, and SEESORB 501, manufactured by SHIPRO KASEI KAISHA, Ltd. It is noted that the "TINUVIN", "IRGANOX", "ADEKA STAB", and "SEESORB" are all registered trade names.

In a case where the composition and the radio wave absorber contain an ultraviolet absorber, the content of the ultraviolet absorber in the composition and the radio wave absorber is not particularly limited; however, it is, for example, preferably 0.2% by mass to 10% by mass with respect to the total mass of the composition and the radio wave absorber.

The content of the ultraviolet absorbing agent in the above radio wave absorber is preferably set to 0.2% by mass or more with respect to the total mass of the radio wave absorber from the viewpoint of improving weather fastness.

In a case where the content of the ultraviolet absorbing agent in the radio wave absorber is 10% by mass or less with respect to the total mass of the radio wave absorber, the decrease in mechanical strength and the occurrence of blooming tend to be capable of being suppressed.

### -Singlet oxygen quencher-

In a case where the composition and the radio wave absorber contain a singlet oxygen quencher, the content of the singlet oxygen quencher in the composition and the radio wave absorber is not particularly limited; however, it is, for example, preferably 0.2% by mass to 10% by mass with respect to the total mass of the composition and the radio wave absorber.

The content of the singlet oxygen quencher in the above radio wave absorber is preferably made to be 0.2% by mass or more with respect to the total mass of the radio wave absorber from the viewpoint of improving weather fastness.

In a case where the content of the singlet oxygen quencher in the radio wave absorber is 10% by mass or less with respect to the total mass of the radio wave absorber, the decrease in mechanical strength and the occurrence of blooming tend to be capable of being suppressed.

In a case of containing a light stabilizer, the composition and the radio wave absorber may contain only one kind of light stabilizer or may contain two or more kinds thereof.

The composition may contain or may not contain a solvent. In a case where the composition contains a solvent, the solvent is not particularly limited, and examples thereof include water, an organic solvent, and a mixed solvent of water and an organic solvent.

Examples of the organic solvent include alcohols such as methanol, ethanol, n-propanol, i-propanol, and methoxypropanol, ketones such as acetone, methyl ethyl ketone, and cyclohexanone, tetrahydrofuran, acetonitrile, ethyl acetate, and toluene. Among these, the solvent is preferably ketones and more preferably cyclohexanone from the viewpoint of drying rate. In a case where the composition contains a solvent, the content of the solvent in the composition is not particularly limited and may be appropriately determined.

The composition used for three-dimensional modeling in the manufacturing method can be prepared by mixing the components. The mixing method is not particularly limited, and examples thereof include a method of mixing by stirring. As the stirring unit, a publicly known stirring device can be used. Examples of the stirring device include mixers such as a paddle mixer and an impeller mixer. A stirring time may be set according to the type of the stirring device, the formulation of the composition, and the like.

For example, the composition can be prepared as a kneaded material by kneading, while heating, a mixture obtained by mixing the particles, the binder, and as necessary, a solvent, an additive, and the like. For example, the kneaded material can be obtained in any shape such as a filament or a pellet that can be used in a three-dimensional (3D) printer. The kneaded material can be three-dimensionally modeled using a 3D printer to be molded into a desired shape, whereby a radio wave absorber (molded product) can be obtained. The shape of the radio wave absorber is not particularly limited and can be any shape such as a plate shape or a linear shape. The "plate shape" includes a sheet shape and a film shape. The plate-shaped radio wave absorber can also be called a radio wave absorbing plate, a radio wave absorbing sheet, a radio wave absorbing film, or the like. The radio wave absorber may be a radio wave absorber having a single composition (for example, a single-layer radio wave absorbing plate) or a combination of two or more portions having different compositions (for example, a laminate). In addition, the radio wave absorber may have a planar shape, may have a three-dimensional shape, or may be a combination of a portion having a planar shape and a portion having a three-dimensional shape. Examples of the planar shape include a sheet shape and a film shape. Examples of the three-dimensional shape include a tubular shape (a cylindrical shape, rectangular tubular shape, or the like), a horn shape, and a box shape (for example, at least one of the surfaces thereof is open).

For example, the thickness of the radio wave absorber is preferably 20.0 mm or less, more preferably 10.0 mm or less, and still more preferably 5.0 mm or less, from the viewpoint of easiness of handling. From the viewpoint of mechanical properties, the thickness is preferably 1.0 mm or more and more preferably 2.0 mm or more. It is noted that in a case where the radio wave absorber is a laminate, the thickness means the total thickness of the radio wave absorber constituting the laminate. The thickness of the radio wave absorber can be measured using a digital length measuring machine and, for example, can be an arithmetic average of the measured values measured at nine locations which are randomly selected.

### <Three-dimensional modeling>

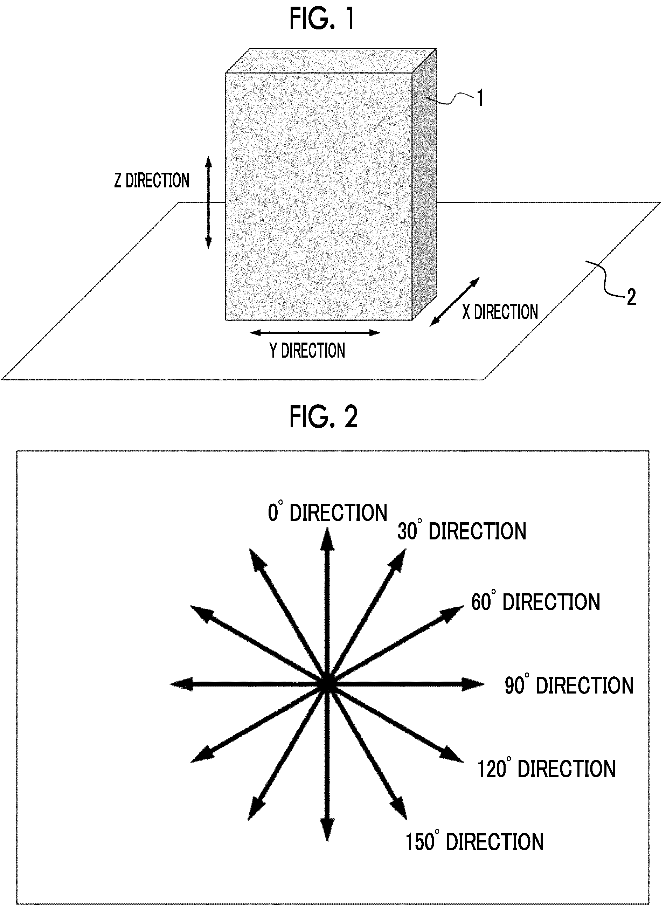

In the manufacturing method, the composition is three-dimensionally modeled by a three-dimensional printer. The "three-dimensional (3D) printer" is a general term for a device capable of directly molding a three-dimensional modeled article from three-dimensional data by adding a material to a stage (also referred to as a "platform"). In the manufacturing method, for example, a 3D printer of a fused deposition modeling (FDM) method (also referred to as a "thermal melt deposition method") can be used. In the 3D printer of the fused deposition modeling method, for example, three-dimensional modeling can be performed as follows. A filament of a material for molding can be supplied to a nozzle of a 3D printer, heated and melted in the nozzle to be softened, extruded from the nozzle, and stacked (that is, laminated) on a stage to obtain a three-dimensional modeled article. In a case where one direction in a plane of the stage of the 3D printer is referred to as an X direction, a direction orthogonal to the X direction in the plane is referred to as a Y direction, and a direction vertical to the stage is referred to as a Z direction, for example, the X direction is a thickness direction of a three-dimensionally modeled article to be molded. In this case, for example, the material for molding can be stacked (laminated) in the Z direction on the stage. Fig. 1 is a view showing three-dimensional modeling using a 3D printer of a fused deposition modeling method. In a case where a plate-shaped molded product 1 shown in Fig. 1 is molded on a stage 2 by three-dimensional modeling using a 3D printer of a fused deposition modeling method, a plate-shaped molded product can be molded as a three-dimensional modeled article by stacking (laminating) the material for molding in the Z direction while moving a nozzle in the X direction and the Y direction.

The 3D printer used in the manufacturing method is not particularly limited, and a 3D printer having a known configuration such as a commercially available 3D printer can be used. The setting conditions of the 3D printer in a case of performing the three-dimensional modeling may be appropriately determined according to a shape of the molded product to be molded and the like.

The radio wave absorber manufactured by the manufacturing method can be incorporated into various articles to which radio wave absorbability is desired to be imparted. It is possible to incorporate a radio wave absorber, which is directly molded into a desired three-dimensional shape from three-dimensional data by three-dimensional modeling using a 3D printer, into an article. In addition, for example, the plate-shaped radio wave absorber can be incorporated into an article in any form as it is or by being bent at any portion.

By the way, the on-vehicle radar, which has been attracting attention in recent years, is a radar that uses radio waves in the millimeter wave frequency band. The millimeter wave is an electromagnetic wave having a frequency of 30.0 GHz to 300.0 GHz. The radio wave absorber is suitable, for example, as a radio wave absorber that is incorporated on a front side (an incident side of the radio wave incident from the outside) of the radio wave transmitting and receiving unit in the on-vehicle radar in order to reduce the side lobe of the on-vehicle millimeter-wave radar.

In addition, the radio wave absorber can also be incorporated into a radio wave absorbing article that is used in the field of wireless technology such as a motion sensor. The radio wave absorber is suitable as a radio wave absorber for improving recognition accuracy by removing unnecessary radio waves in wireless equipment such as an internal sensor of a cellular phone and a biological information sensor. Such a radio wave absorber can be suitably used, for example, in a radio wave absorbing article for a band of 55.0 to 66.0 GHz. The radio wave absorbing article is an article having radio wave absorbability to radio waves of one or more frequencies, and in a case where a radio wave absorber is incorporated into the article as at least a part thereof, the above radio wave absorbability can be obtained. The radio wave absorbing article for a band of 55.0 to 66.0 GHz is an article having radio wave absorbability to radio waves of one or more frequencies in a frequency band of 55.0 to 66.0 GHz. Examples of such an article include the various wireless equipment. In a case where the radio wave absorber is incorporated into such a radio wave absorbing article, unnecessary radio waves can be removed, and thus the recognition accuracy can be improved.

In addition, the bandwidth may be wide-banded depending on the kind of radar in which the radio wave absorber is used. For example, a radar for a 60 GHz band may be used in a 7.0 GHz bandwidth in a range of 57.0 to 64.0 GHz. For a use application to a radar having such a wideband bandwidth, a plurality of kinds of particles selected from the group consisting of magnetic particles and dielectric particles can be mixed to prepare a radio wave absorber that can be compatible with bandwidth widening, and/or a plurality of kinds of radio wave absorbers can be also mixed to prepare a radio wave absorber that can be compatible with bandwidth widening.

### [Radio wave absorber]

An aspect of the present invention relates to a radio wave absorber including magnetic particles, and a binder, in which in a case where any axial direction in a plane perpendicular to a thickness direction of the radio wave absorber is defined as a 0° direction, each of a direction rotated by 30°, a direction rotated by 60°, a direction rotated by 90°, a direction rotated by 120°, and a direction rotated by 150° in a clockwise direction with respect to the axial direction as a reference is defined as a 30° direction, a 60° direction, a 90° direction, a 120° direction, and a 150° direction, and among squareness ratios measured for each of the thickness direction of the radio wave absorber, the 0° direction, the 30° direction, the 60° direction, the 90° direction, the 120° direction, and the 150° direction, a maximum value is defined as SQₘₐₓ and a minimum value is defined as SQₘᵢₙ, a ratio (SQₘₐₓ/SQₘᵢₙ) of SQₘₐₓ to SQₘᵢₙ is less than 1.35. "SQ" is an abbreviation for squareness ratio, "max" is an abbreviation for maximum, and "min" is an abbreviation for minimum.

In the present invention and the present specification, the measurement of the squareness ratio is performed either on the radio wave absorber to be measured itself as the measurement sample, or on a measurement sample cut out from the radio wave absorber to be measured. The shape and size of the measurement sample are not particularly limited as long as the measurement can be performed by the measuring device. In a case of cutting out the measurement sample from the radio wave absorber to be measured, the measurement sample is cut out while maintaining the thickness of the radio wave absorber to be measured. Therefore, the thickness direction of the measurement sample is the thickness direction of the radio wave absorber to be measured. The measurement of the squareness ratio is performed for each measurement direction by the following method. The measurement direction of the squareness ratio is a direction in which a magnetic field is applied during the measurement.

In an oscillating sample magnetometer, the intensity of magnetization of the measurement sample is measured with respect to an applied magnetic field under the conditions of a maximum applied magnetic field of 50 kOe and a magnetic field sweep rate of 104 Oe/sec in an environment with an ambient temperature of 23°C. From the measurement result, a magnetic field (H)-magnetization (M) curve is obtained for the measurement sample. Based on the obtained magnetic field (H) - magnetization (M) curve, saturation magnetization (σs) and residual magnetization (σr) (unit: Am²/kg) are obtained, and a squareness ratio (SQ) is calculated as "σr/σs". Regarding the units, 1 Am²/kg = 1 emu/g, and 1 kOe = (10⁶/4π) A/m.

In the squareness ratio of the measurement sample, any axial direction in a plane perpendicular to the thickness direction is set as a 0° direction, and each of a direction rotated by 30°, a direction rotated by 60°, a direction rotated by 90°, a direction rotated by 120°, and a direction rotated by 150° in a clockwise direction with respect to the axial direction as a reference, is defined as a 30° direction, a 60° direction, a 90° direction, a 120° direction, and a 150° direction, measurement is performed for total seven directions of the thickness direction of the measurement sample, that is, the thickness direction of the radio wave absorber to be measured, the 0° direction, the 30° direction, the 60° direction, the 90° direction, the 120° direction, and the 150° direction.

Fig. 2 is a diagram showing an example of a measurement direction of a squareness ratio. Fig. 2 shows specific examples of the 0° direction, the 30° direction, the 60° direction, the 90° direction, the 120° direction, and the 150° direction. The example shown in Fig. 2 is an example, and any axial direction in a plane perpendicular to the thickness direction is randomly selected and determined as the 0° direction, and the 30° direction, the 60° direction, the 90° direction, the 120° direction, and the 150° direction are determined with respect to the determined 0° direction as a reference.

In the radio wave absorber, a ratio (SQₘₐₓ/SQₘᵢₙ) of a maximum value SQₘₐₓ to a minimum value SQₘᵢₙ in the squareness ratio measured in each of the seven directions is less than 1.35. A radio wave absorber having a small difference in the squareness ratio measured in various measurement directions is preferable since polarization dependence is small. From the viewpoint of further reducing polarization dependence, the ratio (SQₘₐₓ/SQₘᵢₙ) is preferably 1.34 or less, more preferably 1.32 or less, and still more preferably 1.30 or less, 1.28 or less, 1.26 or less, 1.24 or less, 1.22 or less, 1.20 or less, 1.18 or less, 1.16 or less, 1.14 or less, 1.12 or less, and 1.10 or less in this order. The ratio (SQₘₐₓ/SQₘᵢₙ) can be, for example, 1.00 or more or more than 1.00. In a case where the ratio (SQₘₐₓ/SQₘᵢₙ) is 1.00, all the squareness ratios measured in the seven directions are the same value.

For example, according to the manufacturing method described above, it is possible to manufacture a radio wave absorber having the ratio (SQₘₐₓ/SQₘᵢₙ) of less than 1.35. In one form, the aspect ratio of the magnetic particles contained in the radio wave absorber can be 3.0 or less. For the aspect ratio and other details of the magnetic particles contained in the radio wave absorber, the above description regarding the manufacturing method can be referred to. However, the radio wave absorber is not limited to those manufactured by the manufacturing method as long as the radio wave absorber contains magnetic particles and a binder and the ratio (SQₘₐₓ/SQₘᵢₙ) is less than 1.35.

For details of the radio wave absorber, the above description regarding the manufacturing method and the radio wave absorber manufactured by the manufacturing method can be referred to.

### [Radio wave absorbing article]

One aspect of the present invention relates to a radio wave absorbing article including the radio wave absorber. Specific examples of the radio wave absorbing article include an on-vehicle radar. Specific examples thereof include wireless equipment such as an internal sensor of a cellular phone and a biological information sensor. In addition, in one form, the radio wave absorbing article can be a radio wave absorbing article in a band of 55.0 GHz to 66.0 GHz. It suffices that the radio wave absorbing article includes the radio wave absorber according to one aspect of the present invention. Other configurations of the radio wave absorbing article are not particularly limited, and a known technique related to the radio wave absorbing article can be applied.

### [Examples]

Hereinafter, the present invention will be described based on Examples. However, the present invention is not limited to the embodiments shown in Examples. Unless otherwise specified, steps and evaluations described below were carried out in an environment of the ambient air atmosphere. In addition, the steps and evaluations in the following description were carried out at an atmospheric temperature of 23°C ± 1°C, unless otherwise specified. In the following, the "powder of magnetic particles" will be described as a "magnetic powder", the "powder of dielectric particles" will be described as a "dielectric material", and these will be described as a "radio wave absorbing material".

### [Production of magnetic powder A]

15.72 g of strontium carbonate [SrCO₃], 81.49 g of α-iron (III) oxide [α-Fe₂O₃], and 15.72 g of aluminum oxide [Al₂O₃] were weighed, charged into a paint shaker together with 500 g of zirconia beads (bead diameter: 0.5 mm) and 300 g of water, and subjected to a mixing treatment in a paint shaker for 3.5 hours to obtain a dispersion liquid.

After the mixing treatment, the dispersion liquid was recovered while separating the zirconia beads.

The recovered dispersion liquid was subjected to centrifugal separation to discard the supernatant liquid, and then dried in a heating furnace having a furnace temperature of 95°C for 12 hours to obtain a raw material mixture.

Next, the obtained raw material mixture was subjected to a pulverization treatment three times to obtain a powder, where the pulverization treatment was carried out for 30 seconds by using a mill (Absolute 3, manufactured by OSAKA CHEMICAL Co., Ltd.) and setting a variable speed dial to "maximum".

The following treatment was carried out as a flux treatment on the obtained powder.

Strontium chloride (SrCl₂) was dissolved in 100 mL of water to prepare a strontium chloride aqueous solution having a concentration of 10% by mass, which was subsequently added to the powder obtained as described above and subjected to ultrasonic dispersion for 10 minutes. Then, drying was carried out in a heating furnace having a furnace temperature of 95°C for 12 hours, and further, pulverization was carried out with the above-described mill to obtain a pulverized material.

Next, the obtained pulverized material was sintered in a heating furnace having a furnace temperature of 1,250°C for 4 hours, and then the obtained sintered product was subjected to a pulverization treatment three times, where the pulverization treatment was carried out for 30 seconds by using the above mill and setting a variable speed dial to "5". Then, washing was carried out by an ultrasonic treatment until the electric conductivity reached 30 microsiemens (µS) or less, and then drying was carried out in a heating furnace having a furnace temperature of 95°C for 12 hours to obtain a magnetic powder.

Next, the obtained magnetic powder was subjected to an annealing treatment in a heating furnace having a furnace temperature of 1,000°C for 2 hours.

In this way, a magnetic powder A was obtained.

### [Production of magnetic powder B]

A magnetic powder B was obtained according to the method described for the production of the magnetic powder A, except that the flux treatment was not performed.

### [Checking of crystal structure]

The crystal structure of the magnetic material constituting each of the above magnetic powders was checked by X-ray diffraction analysis. As the measurement device, X'Pert Pro manufactured by PANalytical Co., Ltd., which is a powder X-ray diffractometer, was used. The measurement conditions are shown below.

### -Measurement conditions-

X-ray source: CuKα ray
[Wavelength: 1.54 Å (0.154 nm), output: 40 mA, 45 kV]
Scan range: 20° <2θ < 70°
Scan interval: 0.05°
Scan speed: 0.33°/min

As a result of the X-ray diffraction analysis, it has been confirmed that all the magnetic powders have a magnetoplumbite-type crystal structure and are a single-phase powder of a magnetoplumbite-type hexagonal ferrite that does not include a crystal structure other than the magnetoplumbite-type crystal structure.

### [Checking of composition]

The composition of the magnetic material that constitutes each of the above magnetic powders was checked by the high frequency inductively coupled plasma emission spectroscopy analysis. Specifically, the checking was carried out by the following method.

A container (a beaker) containing 12 mg of the magnetic powder and 10 mL of an aqueous solution of hydrochloric acid of a concentration of 4 mol/L was held on a hot plate at a set temperature of 120°C for 3 hours to obtain a dissolution solution. 30 mL of pure water was added to the obtained dissolution solution, which was then filtered using a membrane filter having a filter pore diameter of 0.1 µm. Elemental analysis of the filtrate obtained as described above was carried out using a high frequency inductively coupled plasma emission spectrometer [ICPS-8100, manufactured by Shimadzu Corporation]. Based on the obtained elemental analysis results, a content of each atom with respect to 100% by atom of the iron atom was obtained. Then, based on the obtained content, the composition of the magnetic material was checked. As a result, it was confirmed that the compositions of the magnetic powders A and B are compositions in which A in Formula 1 is Sr and x is 1.65.

### [Measurement of aspect ratio]

For the magnetic powder A and the magnetic powder B, a part of the powder was collected, and the aspect ratio was determined by the method described above.

A part of the powder was also collected from the dielectric material A and the dielectric material B described later, and the aspect ratio was determined by the method described above.

Table 1 shows aspect ratios obtained for the magnetic powder and the dielectric material.

### [Example 1 and Comparative Example 1]

The magnetic powder shown in Table 1 was mixed in an amount such that the volume filling rate of the magnetic particles in the produced radio wave absorber was 20% by volume, with a binder (poly-lactic acid: TERAMAC TP-4030 manufactured by Unitika Ltd.) in an amount such that the volume filling rate of the binder in the produced radio wave absorber was 79.5% by volume and an antioxidant (ADEKA STAB AO-60 manufactured by ADEKA Corporation), thereby preparing a mixture.

The prepared mixture was formed into a filament shape using a compounding tester manufactured by Technovel Corporation, and a filament for a 3D printer having a diameter of 2.85 mm was produced.

The filament for a 3D printer obtained above was attached to a 3D printer of a fused deposition modeling method (S5 manufactured by Ultimaker B.V.), and the 3D printer was set under conditions of a nozzle temperature of 200°C, a stage temperature of 60°C, a lamination pitch of 0.1 mm, and a drawing speed of 30 mm/sec, and as shown in Fig. 1, three-dimensional modeling was performed by moving the nozzle in the X direction and the Y direction with the Z direction as the lamination direction. In this way, a radio wave absorber (three-dimensional modeled article) was obtained as a plate-shaped molded product having a thickness of 2.0 mm (in Fig. 1, the X direction) and a size of 110 mm (in Fig. 1, the Y direction) × 110 mm (in Fig. 1, the Z direction).

### [Comparative Example 2]

A radio wave absorber was obtained by the method described in Comparative Example 1 and Example 1, except that graphite CNP-35 manufactured by Ito Graphite Industry Co., Ltd. was used as the dielectric material A in an amount such that the volume filling rate of the dielectric particles in the produced radio wave absorber was 20% by volume, instead of the magnetic powder.

### [Example 2]

A radio wave absorber was obtained by the method described in Comparative Example 1 and Example 1, except that carbon black #50 manufactured by Asahi Carbon Co., Ltd. was used as the dielectric material B in an amount such that the volume filling rate of the dielectric particles in the produced radio wave absorber was 20% by volume, instead of the magnetic powder.

For each of the radio wave absorbers in Examples and Comparative Examples, the thickness was determined as the arithmetic average of the measured values measured at nine locations which were randomly selected, using a digital length measuring machine [Litematic (registered trade name) VL-50A manufactured by Mitutoyo Corporation]. All the thicknesses of the above radio wave absorbers were 2.0 mm.

### [Measurement of transmission attenuation amount]

The transmission attenuation amounts (unit: %) of each radio wave absorber were measured.

As the measurement device, a vector network analyzer (product name: N5225B) manufactured by Keysight Technologies and a horn antenna (product name: RH12S23) manufactured by KEYCOM Corp were used to measure an S parameter with a free space method by setting an incidence angle to 0°, a sweep frequency to 60 GHz to 90 GHz, and a sweep interval of 0.05 GHz, with one plane of each of the above radio wave absorbers being directed toward the incident side (this measurement system is vertical polarization). S21 of the S parameter at a frequency of 76.5 GHz was defined as a transmission attenuation amount. In order to evaluate the polarization dependence, the radio wave absorber to be measured was rotated by 15° in a direction perpendicular to the plane as a rotation axial direction, and 7 points were measured from 0° to 90°. Table 1 shows a maximum value and a minimum value of the measured transmission attenuation amount. Table 1 also shows a difference between the maximum value and the minimum value of the transmission attenuation amount (maximum value - minimum value).

From the results shown in Table 1, it can be confirmed that, in Examples 1 and 2, as compared with Comparative Examples 1 and 2, the polarization dependence is small (the value of the difference (maximum value - minimum value) between the maximum value and the minimum value of the transmission attenuation amount is zero or smaller than that in Comparative Examples 1 and 2).

**[Table 1]**

| | | Comparative Example 1 | Example 1 | Comparative Example 2 | Example 2 |
|---|---|---|---|---|---|
| Radio wave absorbing material | Type | Magnetic powder A | Magnetic powder B | Dielectric material A | Dielectric material B |
| | Aspect ratio | 3.2 | 1.6 | 16.4 | 1.1 |
| Transmission attenuation amount [%] | Minimum value | 5 | 8 | 10 | 13 |
| | Maximum value | 27 | 8 | 58 | 15 |
| | Maximum value - Minimum value | 22 | 0 | 48 | 2 |

### [Measurement of squareness ratio]

A plate-shaped measurement sample (thickness: 2.0 mm) having a square plane with a side length of 6.0 mm was cut out from each radio wave absorber of Example 1 and Comparative Example 1, and the squareness ratio was determined by the following method using an oscillating sample magnetometer.

Using an oscillating sample magnetometer [model number: TM-TRVSM5050-SMSL type] manufactured by Tamagawa Seisakusho Co., Ltd. as an oscillating sample magnetometer, the saturation magnetization (σs) and the residual magnetization (σr) were obtained under the measurement conditions described above for each of the measurement directions in the seven directions described above. The squareness ratio (SQ) for each measurement direction was calculated as "σr/σs" from the saturation magnetization (σs) and the residual magnetization (σr) obtained for each measurement direction. A ratio (SQₘₐₓ/SQₘᵢₙ) of the maximum value SQₘₐₓ to the minimum value SQₘᵢₙ of the squareness ratio obtained for each of the seven directions was calculated. The results are shown in Table 2.

**[Table 2]**

| | Comparative Example 1 | Example 1 |
|---|---|---|
| SQₘₐₓ | 0.69 | 0.52 |
| SQₘᵢₙ | 0.51 | 0.51 |
| SQₘₐₓ/SQₘᵢₙ | 1.35 | 1.02 |

### [Industrial Applicability]

One aspect of the present invention is useful in the technical field of carrying out various automatic driving controls such as automatic driving control of an automobile, and the wireless technical field such as a motion sensor field.

## Claims

1. A method for manufacturing a radio wave absorber, the method comprising:
three-dimensionally modeling a composition containing one or more kinds of particles selected from the group consisting of magnetic particles and dielectric particles, and a binder, with a three-dimensional printer,
wherein an aspect ratio of the particles is 3.0 or less.

2. The method for manufacturing a radio wave absorber according to claim 1,
wherein the particles are magnetic particles, and
the magnetic particles are particles of a hexagonal ferrite.

3. The method for manufacturing a radio wave absorber according to claim 2,
wherein the hexagonal ferrite is a substitution-type hexagonal ferrite.

4. The method for manufacturing a radio wave absorber according to claim 3,
wherein the substitution-type hexagonal ferrite is a magnetoplumbite-type hexagonal ferrite having a composition represented by Formula 1,
Formula 1 AFe₍₁₂₋ₓ₎AlₓO₁₉
in Formula 1, A represents one or more kinds of atoms selected from the group consisting of Sr, Ba, Ca, and Pb, and x satisfies 0.50 ≤ x ≤ 8.00.

5. The method for manufacturing a radio wave absorber according to claim 4,
wherein in Formula 1, the atom represented by A includes Sr.

6. The method for manufacturing a radio wave absorber according to claim 1,
wherein the particles are dielectric particles, and
the dielectric particles are carbon-based particles.

7. A radio wave absorber comprising:
magnetic particles; and
a binder,
wherein in a case where any axial direction in a plane perpendicular to a thickness direction of the radio wave absorber is defined as a 0° direction,
each of a direction rotated by 30°, a direction rotated by 60°, a direction rotated by 90°, a direction rotated by 120°, and a direction rotated by 150° in a clockwise direction with respect to the axial direction as a reference is defined as a 30° direction, a 60° direction, a 90° direction, a 120° direction, and a 150° direction, and
among squareness ratios measured for each of the thickness direction of the radio wave absorber, the 0° direction, the 30° direction, the 60° direction, the 90° direction, the 120° direction, and the 150° direction, a maximum value is defined as SQₘₐₓ and a minimum value is defined as SQₘᵢₙ,
a ratio SQₘₐₓ/SQₘᵢₙ of SQₘₐₓ to SQₘᵢₙ is less than 1.35.

8. The radio wave absorber according to claim 7,
wherein an aspect ratio of the magnetic particles is 3.0 or less.

9. The radio wave absorber according to claim 7,
wherein the magnetic particles are particles of a hexagonal ferrite.

10. The radio wave absorber according to claim 9,
wherein the hexagonal ferrite is a substitution-type hexagonal ferrite.

11. The radio wave absorber according to claim 10,
wherein the substitution-type hexagonal ferrite is a magnetoplumbite-type hexagonal ferrite having a composition represented by Formula 1,
Formula 1 AFe₍₁₂₋ₓ₎AlₓO₁₉
in Formula 1, A represents one or more kinds of atoms selected from the group consisting of Sr, Ba, Ca, and Pb, and x satisfies 0.50 ≤ x ≤ 8.00.

12. The radio wave absorber according to claim 11,
wherein in Formula 1, the atom represented by A includes Sr.

13. A radio wave absorbing article comprising:
the radio wave absorber according to any one of claims 7 to 12.
